# EUROPÄISCHE PATENTSCHRIFT

(11) **EP 0 316 731 B1**
(45) Veröffentlichungstag und Bekanntmachung des Hinweises auf die Patenterteilung: **19.05.1993**
(21) Anmeldenummer: 88118629.0
(22) Anmeldetag: 09.11.1988
(51) Int. Cl.: C09B 27/00, C07D 277/56, D06P 1/18, D06P 5/00

(54) **Azofarbstoffe auf der Basis von 2-Hydrazinothiazolen, deren Verwendung zum Färben und Bedrucken von Fasermaterialien sowie für den Sublimationstransferdruck**
Azo dyes from 2-hydrazinothiazole, their use in dyeing and printing fibre materials, and in sublimation transfer printing
Colorants azoiques dérivés du 2-hydrazinothiazole, leur emploi pour la teinture et l'impression de matière fibreuses ainsi que pour l'impression par sublimation et transfert

(30) Priorität: 17.11.1987 DE 3738947; 16.02.1988 DE 3804814
(43) Veröffentlichungstag der Anmeldung: 24.05.1989
(73) Patentinhaber: BAYER AG, 51368 Leverkusen (DE)
(72) Erfinder: Hugl, Herbert, Dr., D-5060 Bergisch Gladbach 2 (DE); Beck, Gunther, Dr., D-5090 Leverkusen (DE); Raue, Roderich, Dr., D-5090 Leverkusen 1 (DE)

(56) Entgegenhaltungen:
- FR-A- 1 216 323
- FR-A- 1 309 656
- FR-A- 1 394 697
- GB-A- 1 071 590

## Beschreibung

Gegenstand der Erfindung sind in Wasser praktisch unlösliche Azofarbstoffe der Formel 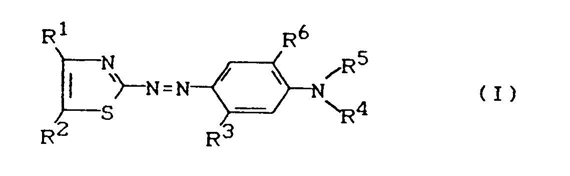
worin - unabhängig voneinander -
- R¹: Cl, CN oder CO₂X,
- R²: CN oder CO₂X,
- R³: H, C₁-C₄-Alkyl, C₁-C₄-Alkoxy, Cl, OH oder NHCOX,
- R⁴ und R⁵: -A-CO₂X, -A-OX, -A-O-CO₂X, -A-O-CO-X oder -(AO)ₙ-X,
- R⁶: H, Cl oder C₁-C₄-Alkoxy,
- X: C₁-C₄-Alkyl,
- A: C₂-C₄-Alkylen und
- n: 1 - 4 bedeuten,
mit der Maßgabe, daß R¹ und R² identisch sind, wenn R¹ für CN oder CO₂X steht.

Bevorzugte Farbstoffe sind solche der Formel (I), worin
- R³: H, CH₃ oder NHCOX',
- R⁴ und R⁵: unabhängig voneinander -A-CO₂X', -A-OX' oder -A-O-CO-X',
- R⁶: H,
- A: C₂H₄,
- X': C₁-C₂-Alkyl bedeuten, und
- R¹/R², X: die obengenannte Bedeutung haben.

Man erhält diese Farbstoffe in an sich bekannter Weise (vgl. DE-A-35 17 273 sowie "Houben-Weyl", Band X/3, Seiten 360-367) durch oxidative Kupplung von Hydrazinen der Formel 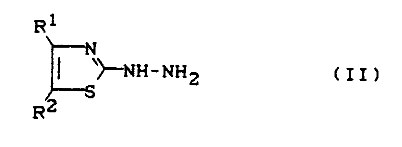
auf Aniline der Formel 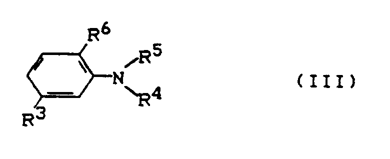
wobei
- R¹ - R⁶: die obengenannte Bedeutung haben.

Geeignete Oxidationsmittel zur Durchführung dieser Reaktion sind: Alkalipersulfate, Alkalihypochlorite, Fe-III-Salze, Alkalijodate und vor allem das System J₂/H₂O₂.

Als Lösungsmittel, in denen die Reaktion vorteilhafterweise durchgeführt wird, kommen in Betracht: niedere aliphatische Alkohole und Säuren.

Während die Verbindungen (III) durchweg bekannt sind, sind die Hydrazine der Formel (II) nur zu einem geringen Teil in der Literatur beschrieben worden (vgl. Chemical Abstracts 57, 6788d).

Gegenstand der Erfindung sind daher weiterhin neue Hydrazinothiazole der Formel (II),
worin
- R¹: Cl oder CN und
- R²: CN oder CO₂X bedeuten,
mit der Maßgabe, daß R² = CN, wenn R¹ = CN.

Die Herstellung der neuen Hydrazine der Formel (II) erfolgt zweckmäßigerweise durch Umsetzung von Verbindungen der Formel 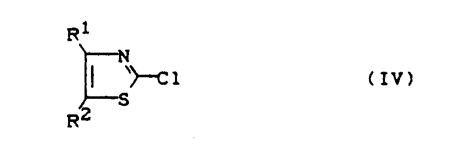
worin
- R¹: Cl oder CN und
- R²: CN oder CO₂X bedeuten,
mit Hydrazin(hydrat) in einem geeigneten organischen Lösungsmittel, wie z.B. C₁-C₃-Alkohole, bei 0 - 40°C.

Auch die Verbindungen der Formel (IV) sind z.T. bekannt. Die neuen Vertreter dieser Stoffklasse (R¹ = Cl; R² = COOX) erhält man nach folgendem Formelschema unter an sich bekannten Reaktionsbedingungen:

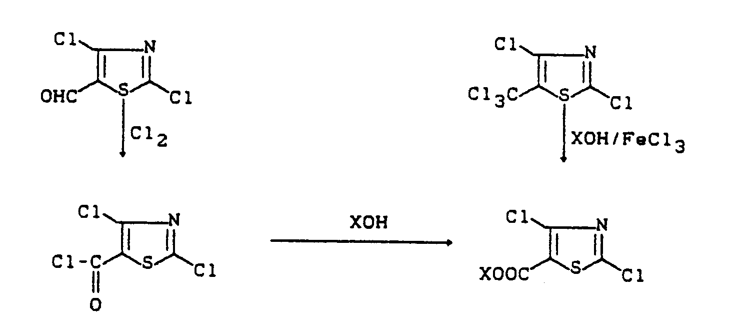

Präparative Einzelheiten dieser Reaktionen sind den nachfolgenden Beispielen zu entnehmen.

Die neuen Verbindungen (II) sind wertvolle Ausgangsmaterialien zum Aufbau von neuen Azofarbstoffen.

Die neuen Farbstoffe weisen gute Allgemeinechtheiten auf und eignen sich hervorragend zum Färben und Bedrucken von synthetischem Fasermaterial, insbesondere Polyesterfasern, nach üblichen Methoden. Die Verbindungen der Formel (I) können darüber hinaus auch für den textilen und insbesondere den nicht-textilen Sublimationstransferdruck eingesetzt werden. Beide Druckverfahren sind an sich bekannt und vielfach in der Literatur beschrieben (vgl. z.B. GB 987 767, 1 189 026, 1 221 126 und 2 161 824).

Bevorzugte erfindungsgemäße Transferfarbstoffe sind solche der Formel (I), worin
- R¹ =: Cl oder CN und
- R² =: CN oder CO₂X′, mit der Maßgabe, daß
- R² =: CN, wenn R¹ = CN,
- R³ =: H oder CH₃,
- R⁴/R⁵ =: CH₂CH₂OCOCH₃ und
- R⁶ =: H.

Zur Anwendung der Farbstoffe der allgemeinen Formel (I) im Sublimations-Transfer-Aufzeichnungsverfahren unter der Einwirkung von Wärme können diese zusammen mit einem Bindemittel in einem Lösungsmittel gelöst oder in feinteiliger Form dispergiert werden. Die erhaltene Druckfarbe wird dann auf einen Träger aufgebracht und getrocknet. Dabei wird ein Transferblatt erhalten.

Geeignete Medien zur Druckfarbenherstellung sind neben Wasser organische Lösungsmittel, z.B. Alkohole wie Methanol, Isopropanol und Isobutanol, Ethylenglykolether wie Ethylenglykolmonomethylether und Ethylenglykolmonoethylether, aromatische Verbindungen wie Toluol, Xylol und Chlorbenzol, Ester wie Essigsäureethylester und Essigsäurebutylester, Ketone wie Aceton, Methylethylketon, Methylisobutylketon und Cyclohexanon, chlorierte Lösungsmittel wie Methylenchlorid, Chloroform und Trichlorethylen, Ether wie Tetrahydrofuran und Dioxan, sowie N,N-Dimethylformamid und N-Methylpyrrolidon.

Geeignete Bindemittel sind wasserlösliche Polymere wie Cellulose, Stärke und Polyacrylate, sowie in Lösungsmitteln lösliche Harze wie Poly-(meth)acrylester, Celluloseether, Celluloseester, Polycarbonate, Polystyrol, Polysulfone, Polyester und dergl.

Geeignete Trägermaterialien sind wärmebeständige Kunststoff-Folien sowie mit wärmebeständigen Dispersionsfarbstoff-affinen Folien beschichtete Papiere. Bevorzugte Kunststoffe sind Polyamide, Polyimide und vor allem Polyester.

Das Aufbringen der Druckfarbe erfolgt beispielsweise durch Spritzen, Gießen, Tauchen, Pflatschen, Rakeln, Walzenauftrag usw..

Die Dicke der aufgetragenen Druckfarbenschicht beträgt nach dem Trocknen 0,1 - 5,0 µm.

### Beispiel 1

Zu einer Mischung aus 160 g n-Butanol, 21 g Eisessig und 60 ml Wasser werden 1,5 g Jod gegeben. Mit ca. 4 g 85 %iger Phosphorsäure wird ein pH-Wert von 1,3-1,5 eingestellt.

Zu dieser Jodlösung werden im Verlaufe von 4 - 5 Stunden 40,4 g N,N-Bis(2-acetoxyethyl)-3-methylanilin, gelöst in 80 ml Eisessig, zugetropft und 33,8 g 2-Hydrazino-4-chlor-5-carboxymethylthiazol als wäßrige Phase zugegeben, und zwar in 10 Portionen. Man läßt ebenfalls im Verlaufe von 4-5 Stunden 31,5 g einer 33 %igen wäßrigen Wasserstoffperoxidlösung zutropfen, wobei die Temperatur durch Wasserkühlung bei 20-25°C gehalten wird. Man läßt 2 Stunden nachrühren und saugt die erhaltene Suspension ab Der Preßkuchen wird mit 2 l warmen Wassers gewaschen, gut abgepreßt und bei 60-80°C im Vakuum getrocknet. Man erhält 49 g Trockenausbeute an Farbstoffe der Formel 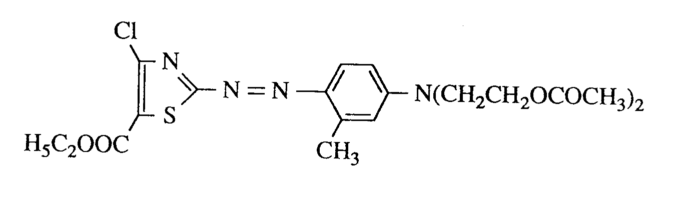
vom Schmelzpunkt 116-118°C.

Er Färbt Polyesterfasern in einem rubinroten Farbton mit sehr guter Lichtechtheit.

In analoger Weise werden die folgenden Farbstoffe hergestellt, die Polyesterfasern in den angegebenen Farbtönen färben:

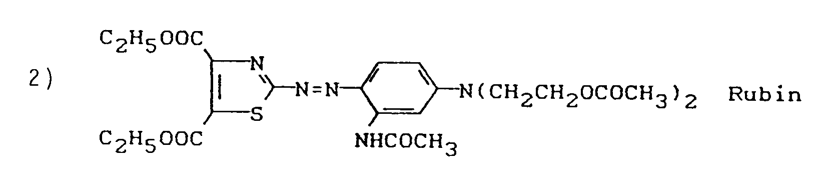

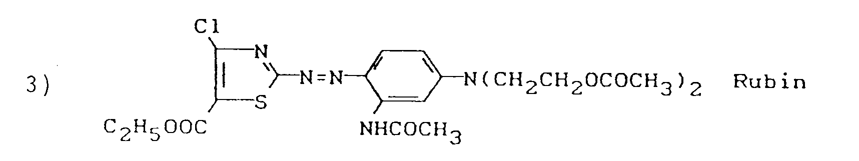

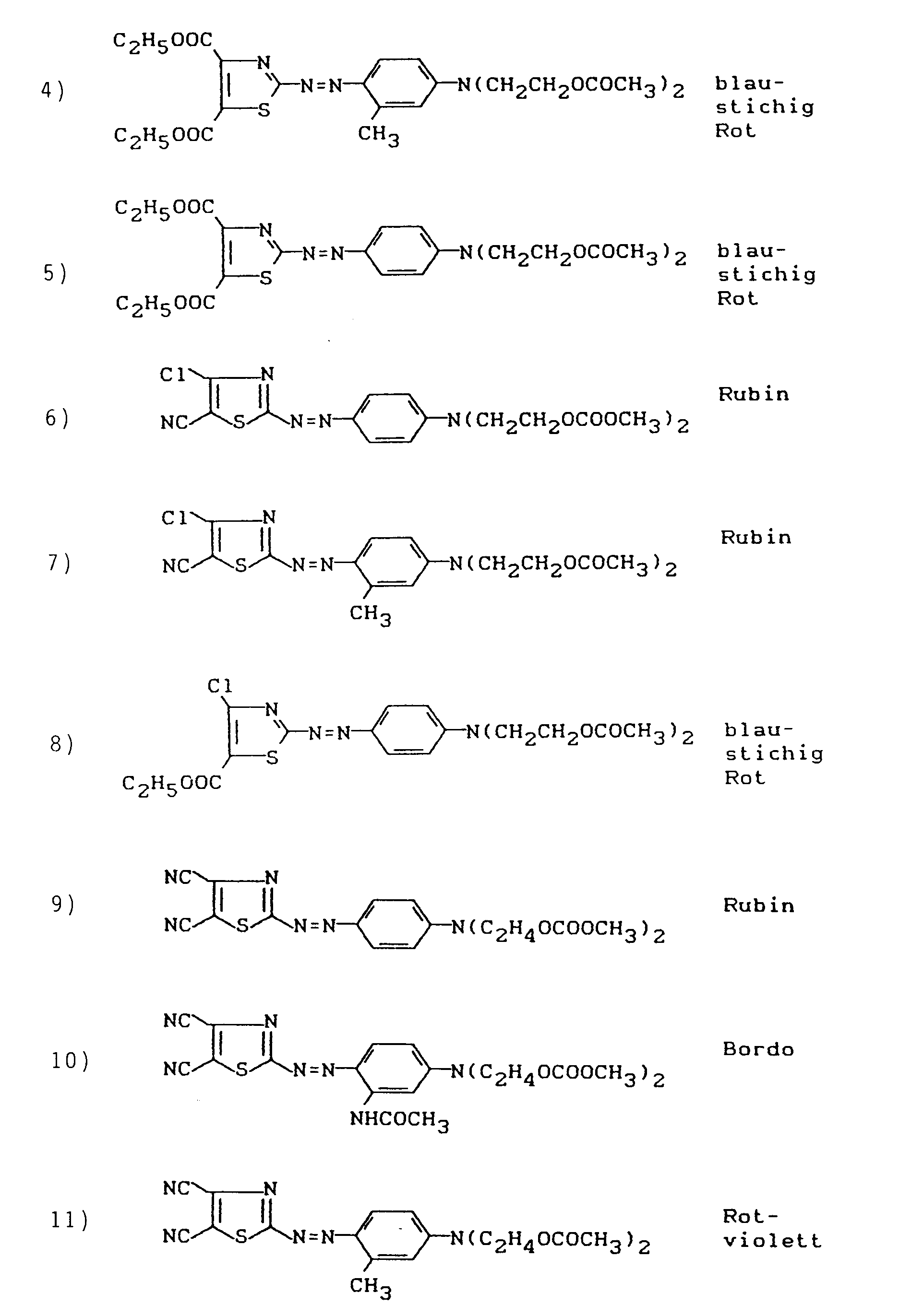

### Beispiel 12

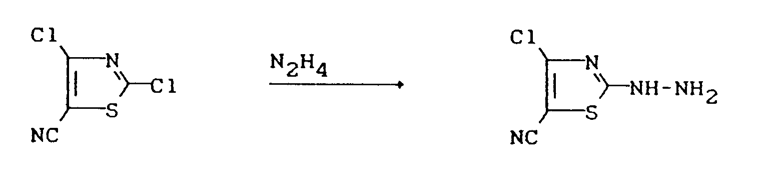

Zu einer Lösung von 76,7 g (0,43 mol) 2,4-Dichloro-5-cyanothiazol (EP 0 115 811 A2) in 480 ml Methanol wird unter Rühren und unter Kühlung bei 15-20°C in etwa einer Stunde eine Mischung aus 43,1 g (0,86 mol) Hydrazinhydrat und 120 ml Methanol getropft. Nach vierstündigem Nachrühren wird abfiltriert, mit Wasser gewaschen und getrocknet. Man erhält so 67,3 g (90 % der Theorie) 4-Chloro-2-hydrazino-5-cyanothiazol. Schmelzpunkt 196°C.

### Beispiel 13

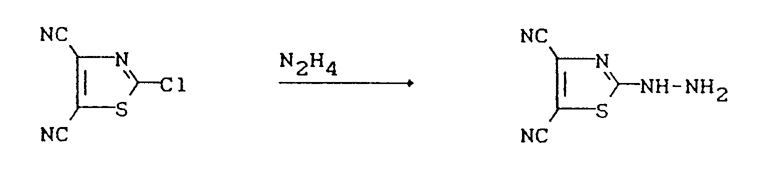

Zu einer Lösung von 94,8 g (0,56 mol) 2-Chloro-4,5-dicyanothiazol (Bull Soc. Chim. Fr. 1969, 4026) in 950 ml Methanol werden unter Rühren und unter Eiskühlung bei 10-15°C in etwa 45 Minuten 56,0 g (1,12 mol) Hydrazinhydrat zugetropft. Nach einstündigem Nachrühren bei 10-15°C wird die entstandene Suspension in 2,8 l Eiswasser eingerührt, der Niederschlag abfiltriert, mit Wasser gewaschen und getrocknet. Man erhält so 85,3 g (92,3 % der Theorie) 2-Hydrazino-4,5- dicyanothiazol. Schmelzpunkt 163°C (Zers.). Die Verbindung ist bei 145°C/0,1 mbar sublimierbar.

### Beispiel 14

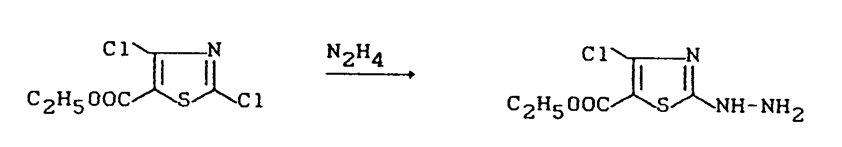

Eine Lösung von 47,4 g (0,21 mol) 2,4-Dichloro-5-thiazolcarbonsäureethylester in 400 ml Methanol wird unter Rühren mit 21,2 g (0,42 mal) Hydrazinhydrat versetzt. Die Temperatur steigt dabei auf etwa 40°C an. Nach wenigen Minuten scheidet sich ein Niederschlag ab Man läßt unter Rühren auf ca. 20°C erkalten, filtriert ab, wäscht mit Wasser nach und trocknet. Man erhält so 41,8 g (90 % der Theorie) 4-Chloro-2-hydrazino-5-thiazolcarbonsäureethylester.
Schmelzpunkt 194°C (Zers.).

Der in analoger Weise hergestellte Methylester hat einen Schmelzpunkt von 206 bis 207°C.

Der 2,4-Dichloro-5-thiazolcarbonsäureethylester ist noch nicht in der Literatur beschrieben. Er kann auf zwei verschiedenen Wegen wie folgt erhalten werden:

### Weg A:

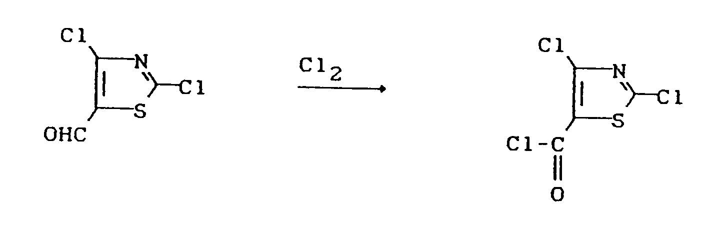

In eine unter Rückfluß (ca. 80°C) siedende Lösung von 200 g (1,1 mol) 2,4-Dichloro-5-thiazolcarboxaldehyd (EP 0 115 811 A2) in 1 l Tetrachlormethan wird so lange Chlorgas eingeleitet, bis im Gaschromatogramm der Reaktionslösung kein Ausgangsprodukt mehr vorhanden ist (Zeitbedarf ca. 15 Stunden). Nach dem Abdestillieren des Lösungsmittels hinterbleiben 233,9 g (98,3 % der Theorie) 2,4-Dichloro-5-thiazolcarbonylchlorid, das direkt in die Folgestufe eingesetzt werden kann. Siedepunkt 120°C/20 mbar, Schmelzpunkt 45-46°C.

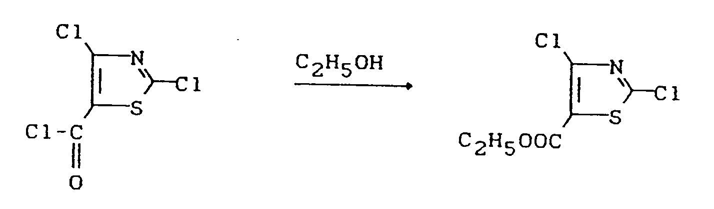

Eine Lösung von 50 g (0,23 mol) 2,4-Dichloro-5-thiazolcarbonylchlorid in 250 ml Ethanol wird etwa 5 Minuten zum Sieden erhitzt. Nach dem Abdestillieren des überschüssigen Ethanols hinterbleiben 50,8 g (97,3 % der Theorie) 2,4-Dichloro-5-thiazolcarbonsäureethylester. Schmelzpunkt 55°C (aus Petrolether).

### Weg B:

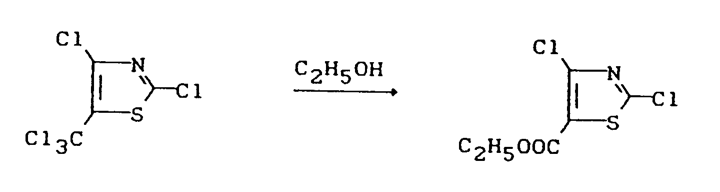

Eine Lösung von 10 g 2,4-Dichloro-5-trichloromethylthiazol (EP 0 192 148 A1) in 50 ml Ethanol, der 0,1 g wasserfreies Eisen(III)-chlorid zugesetzt wurden, wird unter Rühren so lange unter Rückfluß (ca. 80°C) erhitzt, bis im Gaschromatogramm der Reaktionslösung kein Ausgangsprodukt mehr vorhanden ist (Zeitbedarf ca. 15 Stunden). Nach dem Abdestillieren des Ethanols hinterbleibt praktisch reiner 2,4-Dichloro-5-thiazolcarbonsäureethylester, der in allen Eigenschaften mit dem auf dem Weg A gewonnenen Produkt identisch ist.

### Beispiel 15

Eine Druckfarbe wird hergestellt, indem man in einer Perlmühle 10 g des Farbstoffs des Beispiels 1, 10 g Celluloseacetat und 80 g Methylethylketon vermahlt, wobei Farbstoff und Bindemittel in Lösung gehen.

Die so erhaltene Druckfarbenmischung wird mit einem Drahtrakel auf eine 20 µm starke Polyimidfolie aufgetragen. Nach dem Trocknen an der Luft erhält man eine gebrauchsfertige Übertragungsfolie.

Die mit der Druckfarbe beschichtete Oberfläche dieser Übertragungsfolie wird mit dem Aufzeichnungsmaterial in Kontakt gebracht und unter folgenden Bedingungen einem Thermokopf zugeführt:

| | |
|---|---|
| Bildauflösung von Hauptraster und Unterraster: | 4 Punkte/mm |
| Wärmeleistung: | 0,6 W/Bildpunkt |
| Heizzeit des Kopfes: | 10 msec |

Der Aufzeichnungskörper wird durch Auftragen einer Flüssigkeit, die durch Vermischen von 10 g einer wäßrigen Dispersion von 34 Gew.-%, eines gesättigten Polyesters und 1 g Siliciumdioxid hergestellt wurde, auf ein 200 µm dickes, holzfreies Papierblatt unter Verwendung eines Drahtrakels und anschließendes Trocknen hergestellt.

Man erhält eine gleichmäßige, rubin-farbene Aufzeichnung mit einer hohen Farbdichte.

Ähnliche farbstarke Aufzeichnungen erhält man, wenn man anstelle des Farbstoffs Nr. 1 die Farbstoffe Nr. 7 und 11 verwendet.

### Beispiel 16

A) 75 g des Farbstoffs aus Beispiel 8,
   50 g eines anionischen Dispergiermittels, z.B. eines Ligninsulfonates oder eines Kondensationsproduktes aus Naphthalinsulfonsäure und Formaldehyd, und 100 ml Wasser werden vermischt und in eine Kugelmühle durch 10 stündiges Mahlen in eine fein verteilte Form übergeführt.
   Die so erhaltene, ca. 30 % Rohfarbe enthaltende Dispersion ist lagerstabil.
B) Die nach A) erhaltene wäßrige Dispersion kann wie folgt zu einer Druckpaste verarbeitet werden: 50 bis 200 g werden mit 400 g einer 10 %igen Johannisbrotkernmehletherverdickung und 550 bis 400 ml Wasser angeteigt.
C) Mit dieser Druckpaste wird ein Papier im Tiefdruckverfahren bedruckt. Verpreßt man dieses Papier während 15 bis 60 Sekunden bei 200°C mit einem Textil aus Polyesterfasern, so erhält man einen klaren, farbkräftigen, roten Druck.

### Beispiel 17

A) 40 bis 50 g des in Beispiel 8 verwendeten Farbstoffs werden mit 5 bis 10 g eines Emulgatorgemisches aus ethoxyliertem Nonylphenol (4 bis 12 Mol Ethylenoxid) in Wasser angeteigt. Man setzt 10 g Ethylcellulose N4 (Hercules Powder) und 30 bis 40 Teile eines Maleinatharzes zu, das durch Kondensation von Colophonium mit Maleinsäure hergestellt wurde. Man knetet bei 80 bis 100°C ca. 2 Stunden und mahlt anschließend auf einer der üblichen Mühlen. Man erhält ein feinkörniges Farbstoffpulver.
B) 200 g des nach A) erhaltenen Farbstoffpulvers gibt man unter Rühren in ein Gemisch aus 730 g Ethanol, 50 g Ethylenglykol und 20 g Ethylcellulose N22 (Hercules Powder).
C) Mit der so erhaltenen Druckfarbe kann man im Tiefdruck Papiere bedrucken. Von diesen bedruckten Papieren kann man im Transfer-Verfahren Textilien aus Cellulosetriacetat oder Polyamid, z.B. Gewirke, bedrucken und erhält kräftige rote Drucke.

### Beispiel 18

Es wird ein Papier folgender Beschaffenheit 80,0 g/m², 17,1 % Asche-Gehalt, Cobb-Test 88,3 g/m² / 45", Reißlänge (m) trocken:

- längs: = 4260
- quer: = 1800
mit einer Transferdruckfarbe bestehend aus
21,0 Gew.-Tl. Wasser
7,0 Gew.-Tl. Diacetonalkohol
41,3 Gew.-Tl. natürl. Ca-Mg-Carbonat
0,2 Gew.-Tl. Natriumhexametaphosphat
0,5 Gew.-Tl. Naphthalinsulfosäure-Formaldehyd-Konden sationsprodukt
8,0 Gew.-Tl. Quellton® 3 %ig
12,0 Gew.-Tl. Acrylatbinder (wasserlöslich, 50 %ig)
10,0 Gew.-Tl. Farbstoff Nr. 11
100,0 Gew.-Tl.
auf einer Rotationsfilmdruckmaschine mit 80 Mesh-Sieben ohne Zwischentrocknung bedruckt. Die Farbstoffausbeute beim Umdruck auf ein Polyestergewebe beträgt: 76 %.

(Viskosität der Druckfarbe: 3200 cp, gemessen mit dem Viscotester VT-O2 der Firma Gebr. Haake, Berlin).

Aus FR-A 1 216 323 sind bereits Azofarbstoffe bekannt, die durch Kuppeln von diazotierten heterocyclischen Aminen wie beispielsweise 2-Amino-4,5-dicyanothiazol auf N,N-Dicyanoethylanilin hergestellt und zum Färben und Bedrucken von Polyamid verwendet werden können.

## Patentansprüche

1. Azofarbstoffe der Formel 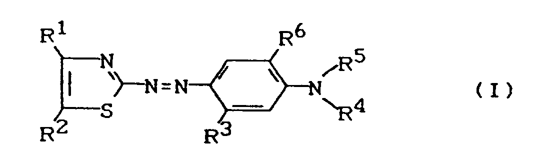 worin - unabhängig voneinander -
R¹ Cl, CN oder CO₂X,
R² CN oder CO₂X,
R³ H, C₁-C₄-Alkyl, C₁-C₄-Alkoxy, Cl, OH oder NHCOX,
R⁴ und R⁵ -A-CO₂X, -A-OX, -A-O-CO₂X, -A-O-CO-X oder -(AO)ₙ-X,
R⁶ H, Cl oder C₁-C₄-Alkoxy,
X C₁-C₄-Alkyl,
A C₂-C₄-Alkylen und
n 1 - 4 bedeuten,
mit der Maßgabe, daß R¹ und R² identisch sind, wenn R¹ für CN oder CO₂X steht.

2. Azofarbstoffe gemäß Anspruch 1, dadurch gekennzeichnet, daß
R³ H, CH₃ oder NHCOX',
R⁴ und R⁵ unabhängig voneinander -A-CO₂X', -A-OX' oder -A-O-CO-X',
R⁶ H,
A C₂H₄,
X' C₁-C₂-Alkyl bedeuten, und
R¹/R², X die obengenannte Bedeutung haben.

3. Azofarbstoffe gemäß Anspruch 1, dadurch gekennzeichnet, daß R¹ und R² CN bedeuten.

4. Azofarbstoffe gemäß Anspruch 1, dadurch gekennzeichnet, daß R¹ und R² COOX bedeuten.

5. Azofarbstoffe gemäß Anspruch 1, dadurch gekennzeichnet, daß R¹ = Cl und R² = CN bedeuten.

6. Verfahren zur Herstellung von Azofarbstoffen, dadurch gekennzeichnet, daß man diese in an sich bekannter Weise durch oxidative Kupplung von Hydrazinen der Formel 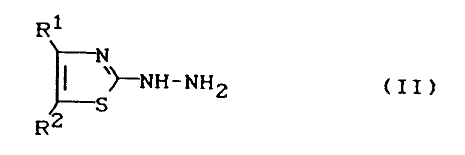 auf Aniline der Formel 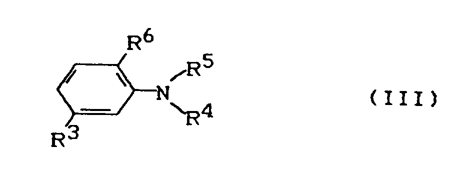 wobei
R¹ - R⁶ die obengenannte Bedeutung haben, erzeugt.

7. Verwendung der Azofarbstoffe gemäß Anspruch 1 zum Färben oder Bedrucken von synthetischen Fasermaterialien.

8. Verwendung der Azofarbstoffe gemäß Anspruch 1 oder 2 für den Sublimationstransferdruck.

9. Verbindungen der Formel 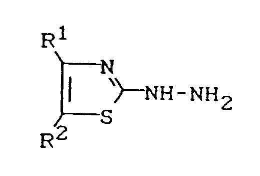 worin
R¹ Cl oder CN,
R² CN oder CO₂X und
X C₁-C₄-Alkyl bedeuten,
mit der Maßgabe, daß R² = CN, wenn R¹ = CN

10. Verbindungen der Formeln 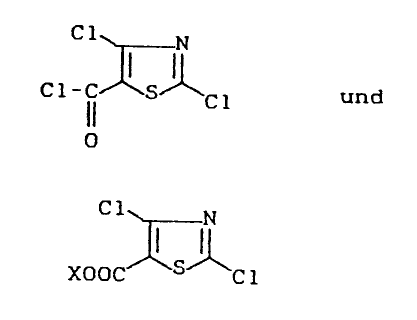 wobei
x C₁-C₄-Alkyl bedeuten.

## Claims

1. Azo dyes of the formula 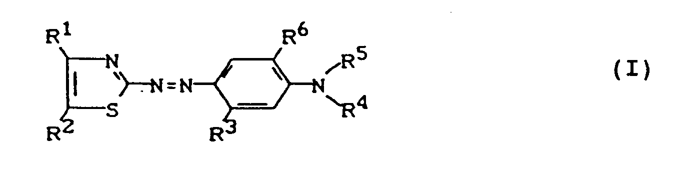 in which - independently of one another -
R¹ is Cl, CN or CO₂X,
R² is CN or CO₂X,
R³ is H, C₁-C₄-alkyl, C₁-C₄-alkoxy, Cl OH or NHCOX,
R⁴ and R⁵ are -A-CO₂X, -A-OX, -A-O-CO₂X, -A-O-CO-X or -(AO)ₙ-X,
R⁶ is H, Cl or C₁-C₄-alkoxy,
X is C₁-C₄-alkyl,
A is C₂-C₄-alkylene and
n is 1 - 4,
with the proviso that R¹ and R² are identical if R¹ is CN or CO₂X.

2. Azo dyes according to Claim 1, characterised in that
R³ is H, CH₃ or NHCOX',
R⁴ and R⁵, independently of one another, are -A-CO₂X', -A-OX' or -A-O-CO-X',
R⁶ is H,
A is C₂H₄,
X' is C₁-C₂-alkyl, and
R¹/R² and X are as defined above.

3. Azo dyes according to Claim 1, characterised in that R¹ and R² are CN.

4. Azo dyes according to Claim 1, characterised in that R¹ and R² are COOX.

5. Azo dyes according to Claim 1, characterised in that R¹ is Cl and R² is CN.

6. Process for the preparation of azo dyes, characterised in that they are produced in a manner known per se by oxidative coupling of hydrazines of the formula 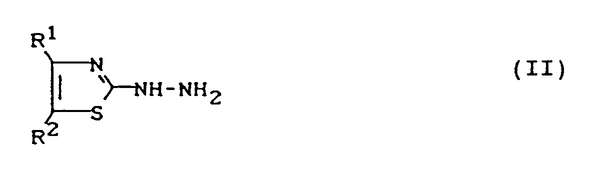 with anilines of the formula 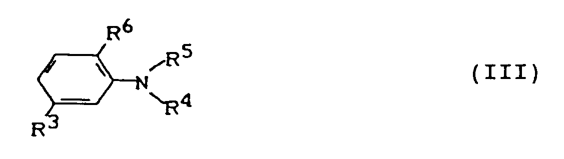 where
R¹ - R⁶ are as defined above.

7. Use of the azo dyes according to Claim 1 for dyeing or printing synthetic fibre materials.

8. Use of the azo dyes according to Claim 1 or 2 for sublimation transfer printing.

9. Compounds of the formula 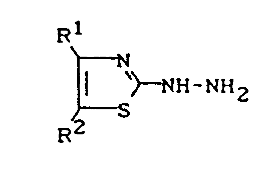 in which
R¹ is Cl or CN,
R² is CN or CO₂X, and
X is C₁-C₄-alkyl,
with the proviso that R² = CN if R¹ = CN.

10. Compounds of the formulae 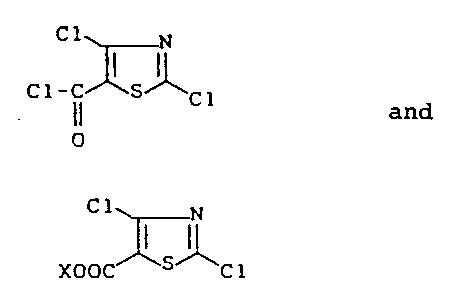 where
X is C₁-C₄-alkyl.

## Revendications

1. Colorants azoïques de formule : 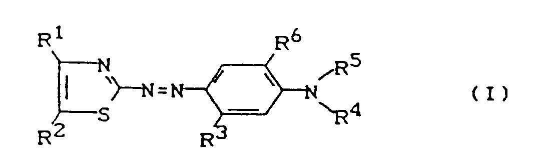 dans laquelle les divers symboles représentent chacun, indépendamment les uns des autres,
R¹ : Cl, CN ou CO₂X,
R² : CN ou CO₂X,
R³ : H, alkyle en C₁-C₄, alcoxy en C₁-C₄, Cl, OH ou NHCOX,
R⁴ et R⁵ : -A-CO₂X, -A-OX, -A-O-CO₂X, -A-O-CO-X ou -(AO)ₙ-X,
R⁶ : H, Cl ou alcoxy en C₁-C₄,
X : alkyle en C₁-C₄,
A : alkylène en C₂-C₄ et
n:1 à 4,
sous réserve que R¹ et R² soient identiques lorsque R¹ représente CN ou CO₂X.

2. Colorants azoïques selon revendication 1, caractérisés en ce que :
R³ représente H, CH₃ ou NHCOX',
R⁴ et R⁵ représentent chacun, indépendamment l'un de l'autre, -A-CO₂X', -A-OX' ou -A-O-CO-X',
R⁶ représente H,
A représente C₂H₄,
X' représente un groupe alkyle en C₁-C₂ et R¹/R², X ont les significations indiquées ci-dessus.

3. Colorants azoïques selon revendication 1, caractérisés en ce que R¹ et R² représentent CN.

4. Colorants azoïques selon revendication 1, caractérisés en ce que R¹ et R² représentent COOX.

5. Colorants azoïques selon revendication 1, caractérisés en ce que R¹ représente Cl et R² représente CN.

6. Procédé de préparation de colorants azoïques, caractérisé en ce que l'on soumet à copulation oxydative, de manière connue en soi, des hydrazines de formule : 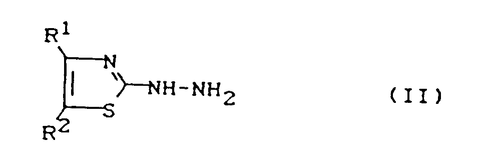 avec des anilines de formule : 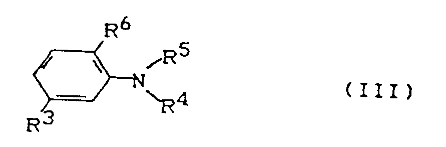 R¹ à R⁶ ayant les significations indiquées ci-dessus.

7. Utilisation des colorants azoïques selon revendication 1 pour la teinture ou l'impression de matières fibreuses synthétiques.

8. Utilisation des colorants azoïques selon revendication 1 ou 2 pour l'impression par sublimation et transfert.

9. Composé de formule : 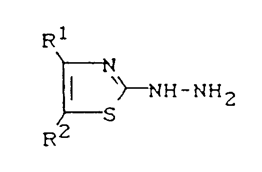 dans laquelle :
R¹ représente Cl ou CN,
R² représente CN ou CO₂X et
X représente un groupe alkyle en C₁-C₄,
sous réserve que R² = CN lorsque R¹ = CN.

10. Composés de formules : 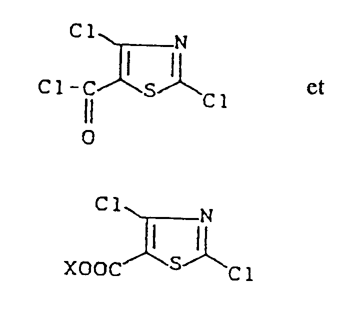 dans lesquelles :
X représente un groupe alkyle en C₁-C₄.
